(19) Europäisches Patentamt
European Patent Office
Office européen des brevets

(11) **EP 1 942 135 A1**

(12) **EUROPEAN PATENT APPLICATION**

(43) Date of publication:
**09.07.2008 Bulletin 2008/28**

(51) Int Cl.:
***C08K 3/36*** *(2006.01)* ***C08L 23/00*** *(2006.01)*

(21) Application number: **06027026.1**

(22) Date of filing: **28.12.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK RS** | (72) Inventors: • **Hagstrand, Per-Ola** **444 46 Stenungsund (SE)** • **Nylander, Perry** **412 61 Göteborg (SE)** • **Johansson, Solveig** **444 47 Stenungsund (SE)** |
| (71) Applicant: **Borealis Technology Oy** **06101 Porvoo (FI)** | (74) Representative: **Kador & Partner** **Corneliusstrasse 15** **80469 München (DE)** |

(54) **Polyolefin composition and pipe with reduced taste and odour**

(57) The present invention relates to a polyolefin composition comprising:
(a) an olefin homo- or copolymer (A), and
(b) amorphous silica (B) as a taste and/or odour reducing agent,

to the use of such a composition for the production of a pipe, and to a pipe material and pipe comprising such a composition.

EP 1 942 135 A1

**Description**

The present invention relates to a polyolefin composition which has reduced taste and odour development which is specifically suitable for pipe materials.

Taste and/or odour development in plastic materials is known to be due to taste and/or odour developing substances, which in turn are produced by chemical degradation or transformation in connection e.g. with the compounding of the plastic materials. Such substances can be of a highly varying chemical character, and the release thereof can constitute a health hazard or a source of irritation. Even comparatively low concentrations of such odour- and/or taste-producing substances constitute a disadvantage in plastic materials as the human being is highly susceptible to odours and tastes in general. Concentrations as low as one or a few ppb are sufficient to make a taste or odour evident. Therefore, attempts have been made to overcome or at least reduce such odours and tastes in various ways such as by degassing the plastic material. The effects of these attempts are reduced and the methods are lengthy and expensive.

It is further known to remove undesired odour and/or taste by means of adsorbing substances, e.g. silica gel, activated aluminum oxide, diatomaceous earth and zeolites.

To this extent JP 1,023,970 suggests adding of e.g. aluminum hydroxide, clay, diatomaceous earth, kaolin, talc, bentonite, activated carbon or activated carbon fibre for materials for packing foodstuffs to be heated in the packing. However, such additives have been found to be without any appreciable effect, except under special circumstances.

Bledzki et al. report in Polymer Testing, Vol. 18, No. 1, 6371, 1999 on reduction of odour emissions in plastic materials by the use of activated charcoal which was extruded into the plastics. The results were evaluated by dynamic olfactometry and odour concentration could be reduced up to about 50 %.

EP Patent No. 0522129 discloses a process for eliminating odour/taste-producing substances in plastic water pipes by adding a specific type of zeolitic molecular sieve to a polyolefin material during processing thereof in a molten state and subsequently forming the polymer material to a water pipe. This process still suffers from a comparatively complex processing and needs a sophisticated additive, namely a hydrophobic aluminum silicate molecular sieve having a pore diameter of at least 5.5 Å, an Si/Al molar ratio in the crystal lattice of at least 35, and a sorption capacity for water at 25°C and 613 Pa of less than 10 wt.-%.

US Patent No. 4,833,181 proposes a polyolefin composition comprising a polyolefin, vegetable fibers mainly composed of cellulose fibers and a deodorizer selected from the group consisting of a combination of a metallic soap and an amine antioxidant, activated carbon, zeolite and a phosphorus compound. Moreover, it is disclosed that the effects of the emission of the deodorizer is enhanced if an antioxidant is further added. In concrete examples a phenolic antioxidant is used in admixture with activated carbon. Also this technology needs complex processing and sophisticated combination of materials which makes the preparation of the final product cost intensive.

Thus, it is the object of the present invention to provide a polyolefin composition which has improved taste and/or odour reduction while simultaneously maintaining desirable and superior mechanical properties, which material can be produced by a simple procedure and at low cost.

Moreover, it is the object of the present invention to provide such an improved composition suitable as a pipe material, where in the use of pipes produced from such a material extremely low concentrations of odour- and/or taste-developing substances are released into substances to be transported through the pipes, especially water.

The present invention is based on the finding that these objects can be achieved by incorporating into a polyolefin resin an amorphous silica.

Therefore, the present invention provides a polyolefin composition comprising:

(a) an olefin homo- or copolymer (A), and

(b) amorphous silica (B) as a taste and/or odour reducing agent.

It has surprisingly been found that amorphous silica is very effective as a taste and/or odour reducing agent so that only small amounts need to be incorporated into the polyolefin composition to obtain the desired taste/odour reduction effect. At the same time, the use of amorphous silica as taste and odour reducing agent is much more cost effective than the use of conventional taste and odour reducing agents such as zeolites having a similar effect.

Preferably, in the polyolefin composition amorphous silica (B) is present in an amount of from 0.05 to 3%, more preferably is present in an amount of 0.05 to 1 wt%, most preferably is present in an amount of 0.1 to 0.5 wt%, based on the weight of the total composition.

The average particle size of the amorphous silica (B) is preferably below 20 μm, more preferably is below 10 μm, and most preferably is below 7 μm.

The amorphous silica (B) used in the composition of the invention may be any kind of amorphous silica, either naturally occurring or synthetically produced amorphous silica, including pyrogenic and precipitated silica.

According to a preferred embodiment of the present invention the amorphous silica is a synthetic amorphous silica.

According to a even more preferred embodiment of the present invention, the synthetic amorphous silica is a SYLOBLOC ® silica. Such a silica is specifically preferred due to its large internal surface area, its high porosity which properties are maintained during the milling process (micronisation) during its preparation. Due to its high disposability, SYLOBLOC ® silica (available from Grace Davison) may be incorporated into the polyolefin composition according to the present invention with high homogeneity thus enhancing its taste and/or odour reduction profile.

In a further preferred embodiment, the amorphous silica preferably is a pyrogenic silica. As such pyrogenic silica, those commercialized under the trade name AEROSIL ® (available from Degussa) are specifically useful.

The moisture content of the amorphous silica (B) measured at a temperature of 160 °C is preferably 5 wt% or lower, more preferably 3 wt% or lower, and most preferably 2.5 wt.% or lower.

The pH-value of the amorphous silica (B) measured in 5% aq. suspension (DIN EN ISO 787-9) preferably is from 3.0 to 7.0, more preferably from 3.5 to 6.5.

The amorphous silica (B) preferably has an $SiO_2$-content (dry basis) of 99 wt% or more.

The specific surface area (BET) of the amorphous silica (B) is preferably more than 100 $m^2/g$, more preferably more than 200 $m^2/g$, and most preferably more than 380 $m^2/g$.

Polyolefins which may be used in the composition of the invention include homopolymers of alpha-olefins, copolymers of at least one alpha-olefin with a further co-monomer which may be one or more alpha-olefins or another co-monomer, random or block copolymers. The polyolefin (A) may also consist of a mixture of different polyolefins.

Preferably, the polyolefin (A) is a homo- or copolymer of ethylene or propylene.

According to a preferred embodiment, the polyolefin (A) used in the polyolefin composition according to the present invention is a multi-modal olefin polymer, i.e. comprises at least two fractions with different weight average molecular weight.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Usually, the olefin homo- or copolymer (A) makes up at least 90 wt% of the total composition. Preferably, the olefin homo- or copolymer (A) is consisting of fractions (I) and (II), optionally further comprising a prepolymer fraction in an amount of up to 20 wt%, preferably up to 10 wt%, more preferably up to 5 wt% of the total base resin.

In addition to the olefin homo- or copolymer (A) and the amorphous silica (B), usual additives for utilization with polyolefins, such as pigments, stabilizers (antioxidant agents), antacids and/or anti-UVs, antistatic agents and utilization agents (such as processing aid agents) may be present in the polyethylene composition.

Preferably, the amount of these additives is 10 wt% or below, further preferred 8 wt% or below, of the total composition.

Preferably, the composition comprises carbon black in an amount of 8 wt% or below, further preferred of 1 to 4 wt%, of the total composition.

Further preferred, the amount of additives different from carbon black is 1 wt% or less, more preferably 0.5 wt% or less.

Furthermore, preferably the olefin homo- or copolymer is an ethylene copolymer which comprises

(I) an ethylene homo- or copolymer fraction, and

(II) an ethylene copolymer fraction comprising at least one alpha-olefin comonomer having at least 3 carbon atoms,

wherein

(i) fraction (I) has a lower average molecular weight than fraction (II), and

(ii) the ethylene copolymer fraction (II) comprises more than 0.5 mol% of at least one alpha-olefin comonomer having at least 3 carbon atoms.

The term molecular weight where used herein denotes the weight average molecular weight $M_w$.

Furthermore, the ethylene copolymer preferably has an MFR of 0.1 to 15 g/10min more preferably of 0.2 to 1.2 g/10min, and most preferably from 0.3 to 0.9 g/10min, measured in accordance with ISO 1133 at 190 °C and a load of 5.0 kg.

The ethylene copolymer preferably has a density of below 965 kg/m$^3$, more preferably below 950 kg/m$^3$.

In the ethylene copolymer, preferably the weight ratio of fractions (I):(II) in the base resin is 35:65 or higher, i.e. is 35:65 or an even higher amount of fraction (I) is present, further preferred is 40:60 or higher, and most preferred is 42:58 or higher.

Furthermore, preferably the weight ratio of fractions (I):(II) in the ethylene copolymer is 60 to 40 or lower, more preferably is 50:50 or lower. The weight ratio of fraction (I):(II) may also preferably range between (43-51): (57-49).

The ethylene copolymer preferably comprises at least 0.25 mol%, more preferably at least 0.55 mol%, more preferably at least 0.75 mol%, and still more preferably at least 0.95 mol% of at least one alpha-olefin comonomer having at least 3 carbon atoms.

Fraction (II) of the ethylene copolymer preferably comprises at least 0.5 mol%, more preferably at least 1.1 mol%, and still more preferably at least 1.5 mol% of at least one alpha-olefin comonomer having at least 3 carbon atoms.

The alpha-olefin comonomer of fraction (II) and the base resin is preferably having from 3 to 8 carbon atoms, more preferably from 6 to 8 carbon atoms, and most preferably is selected from 1-hexene, 4-methyl-1-pentene and 1-octene.

Further, the ethylene copolymer preferably has a density of 930 kg/m$^3$ or higher.

The MFR (ISO 1133, 190°C, 5 kg) of the ethylene copolymer preferably is 5g /10 min or below, more preferably 1g/ 10 min or below.

Fraction (I) of the polyethylene composition preferably is having a density of 950 kg/m$^3$ or higher, more preferably of 960 kg/m$^3$ or higher, and most preferably of 968 kg/m$^3$ or higher.

Fraction (I) of the polyethylene composition preferably is an ethylene homopolymer.

The MFR (ISO 1133, 190°C, 2.16 kg) of fraction (I) preferably is at least 10 g/10min, more preferably is at least 100 g/10min, more preferably is at least 200 g/10min.

The above polyolefin composition according to the present invention may be prepared by a process which comprises the steps of

(a) adding to an olefin homo- or copolymer (A) in its molten state, an amorphous silica (B) as a taste and/or odour reducing agent, and

(b) thoroughly compounding the components (A) and (B) to obtain a homogeneous polyolefin composition.

According to the present invention, when the taste and/or odour reducing agent is added to the polyolefin raw material in its molten state, it may be compounded to pellets of finished material. The silica may be added either as it is or in the form of a so-called master batch, i.e. mixed with a polymer. The process may preferably be conducted in an extruder or another compounding device. If an extruder is used, the components are mixed and the amorphous silica is uniformly distributed by dispersion in the molten polymer material.

In the final polyolefin composition the amorphous silica will effectively catch and eliminate undesired odour- and/or taste-causing substances and therefore, the polyolefin composition and pipe material made therefrom will provide effective and improved taste- and/or odour reduction which facilitates the transport of any desired material through such pipe material, especially if water pipes are envisaged.

The silica component used in the polyolefin composition according to the present invention provide unexpected advantages in taste and/or odour reduction while being specifically cost effective. Thus, the present invention provides an economic manner of providing the agents suitable for drastically reducing taste and/or odour development in polyolefin materials. This is specifically advantageous if pipes are made from such polyolefin materials which are used for transport of fluids, especially water.

The following examples will show that the advantages of cost effectiveness and taste and/or odour scavenging are prominent.

Water sent through the pipe material according to the present invention will be far less deteriorated by odour- and/or taste-causing substances which would be released from polyolefins in prior art pipe materials and the inventive polyolefin composition and pipe material is therefore superior to such conventional materials.

The present invention also concerns the use of a polyolefin composition as described above for the production of a pipe, in particular a drinking water pipe, i.e. a pipe for transport of drinking water.

Furthermore, the invention also concerns a pipe, in particular a drinking water pipe, comprising the polyolefin composition as described above.

The present invention will be illustrated by the following non-limiting examples given below.

**Methods and Examples**

**1. Taste and/or odour testing (organoleptic testing)**

For the purpose of determining the emission of taste-causing substances from different plastic materials, a great number of materials have been tested while using a taste panel. The tested materials have been produced by compounding a high density polyethylene having a density of 959 kg/m3 and containing 2.3 % carbon black and normal additives that are required for stabilization/processing and also serving as reference material, and different molecular sieve materials on a Prism lab compounding line at 200°C with an output of 2.5 kg/h. The material was pelletized in conjunction with the extrusion and directly put in clean glass bottles in order to conserve the taste and odour level.

**Sample preparation**

A sample of 32 g pellets was taken for each test. The pellet sample is placed in a Büchner funnel and rinsed with reference water for one minute. The granules are transferred to an Erlenmeyer flask with ground joint containing a magnetic bar and the flask is filled with reference water and closed with a glass plug. The ratio between granules and water volume should be 32 g/1000ml. It is important that no air bubbles appear between the glass plug and the granules. The flask is placed for 4 hours in a magnetic agitator bath with a temperature of 30 °C $\pm$ 1 °C (polypropylene material: 70°C $\pm$ 1 °C) and with a good stirring speed.

After the extraction, the test water is poured into a glass bottle with ground joint and closed with a glass plug. The bottle is left over night. The next day the organoleptic test can be performed. The reference water is prepared as described above but without granules.

The difference in temperature between the test water and the reference water may not exceed 0.5 °C.

The organoleptic panel shall consist of 5 or more participants for the taste test and 3 or more participants for the odour test. The participants shall be trained and familiar with taste/odour judgement of water samples. The test water was diluted according to table below:

| Sample | Test water (ml) | Dilution water (ml) | Taste/odour level |
|---|---|---|---|
| 1 | 400 | 0 | 1 |
| 2 | 260 | 140 | 1.5 |
| 3 | 200 | 200 | 2 |
| 4 | 100 | 300 | 4 |

Calculation of taste/odour level is performed according to formula:

$$(a+b)/a = \text{taste/odour level,}$$

wherein:

a = volume (ml) of the inspected water in the mixture, where the taste and odour can be detected.

b = volume of dilution water, which is used in the mixture (total) volume a + b = 400 ml. The dilution water shall have the same quality as the reference water.

The test water samples, 1 - 4, are transferred to plastic cups and placed in front of each participant. Place the cups in a system, where the degree of test water in the samples increases gradually, i.e. sample no 4 as the first sample and sample no 1 as the last sample.

Fill 4 cups with reference water, which are placed in pairs with diluted samples. Next to these samples, place a cup with known reference water (0 - sample). The task for the participant in the panel is to compare to known reference water with the coded samples in each pair of cups. The participant will decide if the two samples in each pair are equal or if any of the samples have an annoying taste/odour.

In a protocol, the participant indicates with a cross if any of the samples pairs have an annoying taste/odour.

The procedure is to start with sample pair no. 4 and conclude with sample pair no. 1, i.e. any possible taste/odour annoying components are gradually increasing. A protocol for taste/odour test is enclosed.

The result from the taste/odour test is recorded in a protocol and evaluated. Taste/odour in test water exists, if > 50% of the participants in a panel indicate taste/odour in a test water.

The following taste/odour levels exist; <1, 1-1.5, 1.5-2, 2-4, >4

Example of different taste/odour points and corresponding taste/odour levels with 5/3 participants in the organoleptic panel,

| taste/odour points | taste/odour level |
| --- | --- |
| 2110 | <1 |
| 3210 | 1 - 1.5 |
| 3321 | 1.5 - 2 |
| 5430 | 2 - 4 |
| 5533 | >4 |

The border line for a material to be approved concerning taste/odour is 1.5 -2.

## 2. Compositions

The following compositions (Examples 1 to 4 and Reference Example 5) were subjected to the tests specified above.

Below is a description of the components used:

1. Sylobloc S500® (available from Grace Davison):

Amorphous silica, moisture (160°C): max. 2.0 wt.%, average particle size: 4.6 to 5.6 micrometer, pH (5% aq. suspension): 4.0 to 6.0 (DIN

EN ISO 787-9), $SiO_2$ content (dry basis) 99.4 wt% (DIN 55921), pore volume ($H_2O$): 0.4 ml/g;

2. Aerosil 380® (available from Degussa):

Amorphous silica (pyrogenic silicic acid), moisture (2h at 105°C):

greater than or equal to 2.0 wt.%, average primary particle size: 7 nm, pH (4% aq. dispersion): 3.7 to 4.7, $SiO_2$ content (based on ignited material) greater than or equal to 99.8 wt%, specific surface area (BET): 350-410 $m^2$/g;

3. Abscents® 2500: Odour neutralizer available from UOP (USA). Composition: Sodium aluminio silicate (zeolite), CAS-no. 1318-02-1

4. Zeoflair® 300: Available from Zeochem. Microporous hydrophobic zeolite powder, containing ZSM-5 and US-Y zeolites.

As a polyolefin, a bimodal polyethylene was used: $MFR_5$: 0,25 g/10min, (ISO 1133, 190°C), $MFR_{21}$: 9.0g/10min (ISO 1133, 190°C), density: 959 kg/$m^3$, comonomer: 1-butene, 2.3 % carbon black.

The properties of the compositions (all amounts given in weight %) and the results of the tests are given in Table 1.

Table 1 shows that by adding conventional taste- and/or odour -adsorbing zeolitic compounds the expected taste- and/or odour reducing effect is obtained. However, those conventional deodorizing agents suffer from considerable cost drawbacks whereas the taste and odour reducing agents according to the present invention yield a similar effect on taste and/or odour and are superior in cost-effectiveness.

| Table 1 | | Silica | | Zeolite | | Reference |
|---|---|---|---|---|---|---|
| Example | | 1 | 2 | 3 | 4 | 5 |
| | | Compositions | | | | |
| Bimodal HDPE | | 99.75 | 99.75 | 99.85 | 99.85 | 100 |
| Aerosil® 380 (Degussa) | | 0.25 | | | | |
| Sylobloc® S500 (Grace) | | | 0.25 | | | |
| Abscents® 2500 (UOP) | | | | 0.15 | | |
| Zeoflair® 300 (Zeochem) | | | | | 0.15 | |
| | | Properties | | | | |
| Taste, panels results | | 4200 | 3200 | 4000 | 4200 | 4442 |
| Taste level | | 1-1.5 | 1-1.5 | 1 - 1.5 | 1-1.5 | 2-4 |
| Odour, panel results | | 3000 | 2100 | 2100 | 2000 | 3331 |
| Odour level | | 1 - 1.5 | < 1 | < 1 | < 1 | 2-4 |
| Relative additional additive cost | | 1 | 1.2 | 1.7 | 2.1 | - |

**Claims**

1. A polyolefin composition comprising:

   (a) an olefin homo- or copolymer (A), and
   (b) amorphous silica (B) as a taste and/or odour reducing agent.

2. The polyolefin composition according to claim 1, wherein amorphous silica (B) is present in an amount of from 0.05 to 3 wt%, based on the weight of the total composition.

3. The polyolefin composition according to any of the preceding claims, wherein the amorphous silica (B) has an average particle size below 20 micrometer.

4. The polyolefin composition according to claim 3, wherein the amorphous silica (B) has an average particle size below 10 micrometer.

5. The polyolefin composition according to any of the preceding claims, wherein the amorphous silica (B) is contained in the polyolefin composition in an amount of from 0.05 to 3 wt. %.

6. The polyolefin composition according to any of the preceding claims, wherein the polyolefin (A) is an ethylene or propylene homo- or copolymer.

7. The polyolefin composition according to any of the preceding claims, wherein the polyolefin (A) is a multimodal olefin polymer.

8. The polyolefin composition according to any of the preceding claims, wherein the polyolefin (A) comprises an ethylene homo- or copolymer comprising at least two fractions with different weight average molecular weight.

9. The polyolefin composition according to claims 7 or 8, wherein the multimodal olefin polymer has an MFR (ISO 1133, 190°C, 5.0 kg) of 0.1 to 15 g/10 min.

10. The polyolefin composition according to claim 9, wherein the multimodal olefin polymer has an MFR (ISO 1133, 190°C, 5.0 kg) of 0.2 to 1.2 g/10 min.

11. Use of a polyolefin composition according to any of the preceding claims for the production of a pipe having reduced taste and/or odour development.

**12.** A pipe having reduced taste and/or odour development comprising the polyolefin composition according to any of claims 1 to 10.

**European Patent Office**

**EUROPEAN SEARCH REPORT**

Application Number

EP 06 02 7026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 795 576 A (UNION CARBIDE CHEM PLASTIC [US]) 17 September 1997 (1997-09-17) * page 2, lines 51-58; claim 1 * ----- | 1-12 | INV. C08K3/36 C08L23/00 |
| X | GB 2 410 308 A (UPONOR INNOVATION AB [SE]) 27 July 2005 (2005-07-27) * page 16, lines 25-35; claims * ----- | 1-12 | |
| X | EP 1 695 995 A (DUTCH POLYMER INST [NL]) 30 August 2006 (2006-08-30) * claims 8,9,12,14 * ----- | 1-12 | |
| X | JP 06 016878 A (MITSUBISHI PETROCHEMICAL CO) 25 January 1994 (1994-01-25) * abstract * ----- | 1-12 | |
| A | EP 0 989 140 A (FINA RESEARCH [BE]) 29 March 2000 (2000-03-29) * the whole document * ----- | 1-12 | |

TECHNICAL FIELDS SEARCHED (IPC)

C08K
C08L

The present search report has been drawn up for all claims

| Place of search | Date of completion of the search | Examiner |
|---|---|---|
| Munich | 21 February 2007 | Zeslawski, Wojciech |

EPO FORM 1503 03.82 (P04C01)

## ANNEX TO THE EUROPEAN SEARCH REPORT
## ON EUROPEAN PATENT APPLICATION NO.

EP 06 02 7026

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2007

| Patent document cited in search report | | Publication date | Patent family member(s) | | Publication date |
|---|---|---|---|---|---|
| EP 0795576 | A | 17-09-1997 | CA | 2198960 A1 | 04-09-1997 |
| | | | CN | 1172123 A | 04-02-1998 |
| | | | HU | 9700538 A2 | 30-03-1998 |
| | | | ID | 20020 A | 10-09-1998 |
| | | | JP | 3304280 B2 | 22-07-2002 |
| | | | JP | 9241447 A | 16-09-1997 |
| | | | NO | 970961 A | 05-09-1997 |
| | | | US | 5922471 A | 13-07-1999 |
| | | | ZA | 9701825 A | 30-07-1998 |
| GB 2410308 | A | 27-07-2005 | CA | 2554042 A1 | 01-09-2005 |
| | | | EP | 1708880 A2 | 11-10-2006 |
| | | | EP | 1708881 A2 | 11-10-2006 |
| | | | WO | 2005080077 A2 | 01-09-2005 |
| | | | WO | 2005070671 A2 | 04-08-2005 |
| EP 1695995 | A | 30-08-2006 | WO | 2006089676 A1 | 31-08-2006 |
| JP 6016878 | A | 25-01-1994 | JP | 3285935 B2 | 27-05-2002 |
| EP 0989140 | A | 29-03-2000 | NONE | | |

EPO FORM P0459

For more details about this annex : see Official Journal of the European Patent Office, No. 12/82

**EP 1 942 135 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1023970 A
- EP 0522129 A
- US 4833181 A

**Non-patent literature cited in the description**

- **BLEDZKI et al.** *Polymer Testing,* 1999, vol. 18 (1), 6371

11